# EUROPEAN PATENT APPLICATION

(11) **EP 1 770 994 A2**
(43) Date of publication of application: **04.04.2007**
(21) Application number: 06017776.3
(22) Date of filing: 25.08.2006
(51) Int. Cl.: H04N 5/44

(54) **Broadcast receiver and method of controlling the same**

(30) Priority: 30.09.2005 JP 2005288383
(71) Applicant: KABUSHIKI KAISHA TOSHIBA, Tokyo 105-8001 (JP)
(72) Inventor: Fukushima, Michihiro c/o Intellectual Property Div, Minato-ku Tokyo 105-8001 (JP)
(74) Representative: HOFFMANN EITLE

(57) **Abstract**

A control unit (12) is provided which generates a video signal on the basis of an application corresponding to a receiving function. Then, the control unit (12) outputs a predetermined video signal at the time of turning on of a power source thereof, starts up an application in the state that a predetermined video signal is output, and in the state that a video signal is generated from the broadcast signal on the basis of the start-up of the application, outputs the video signal in the place of the predetermined video signal.

## Description

The present invention relates to a broadcast receiver and a method of controlling the same, the broadcast receiver realizing a digital broadcast receiving function in such a manner that a built-in micro processor unit (MPU) controls a decoder by means of software.

As is already known, when a power source of such a digital broadcast receiver described above is turned on, the MPU starts up an application which commands the receiving function to acquire program information, and the acquired program information is subjected to decoding process to thereby display the program information on a display panel. For this reason, a long time is required from the start-up of the application up to the image output.

Furthermore, in the case where the application uses an operating system (OS), the start-up time of the OS is also required. Still furthermore, in the case where the application is operated with a random access memory (RAM), a time required for expanding the application from a read only memory (ROM) to the RAM is also added thereto.

Jpn. Pat. Appln. KOKAI Publication No. 2002-368634 discloses a data broadcast receiver. The data broadcast receiver has a configuration in which even if it takes time to display a new data screen, a user is allowed to recognize that the data broadcast receiver is normally operated by means of a notification function which enables visual recognition, such as, for example, lighting a light emitting diode (LED).

The present invention has been made in view of the aforementioned circumstances. An object of the invention is to provide a broadcast receiver and a method of controlling the same, the broadcast receiver allowing a user to recognize that the start-up operation is transmitted to a device in such a manner that static images or motion images which are prepared in advance are displayed on a screen during a time in which the image output is started after the start of the start-up operation.

According to one aspect of the present invention, there is provided a broadcast receiver comprising: a receiving unit configured to receive a broadcast signal; a control unit configured to generate a video signal with respect to the broadcast signal received at the receiving unit on the basis of application corresponding to a receiving function; and an output unit configured to output the video signal generated at the control unit, wherein the control unit is configured to: cause the output unit to output a predetermined video signal at the time of turning on a power source thereof; cause the application to be started up in the state that the predetermined video signal is output; and cause the output unit to, in the state that a video signal is generated from the broadcast signal on the basis of the start-up of the application, output the video signal in the place of the predetermined video signal.

According to another aspect of the present invention, there is provided a method of controlling a broadcast receiver comprises: a receiving unit configured to receive a broadcast signal; a control unit configured to generate a video signal with respect to the broadcast signal received at the receiving unit on the basis of an application corresponding to a receiving function; and an output unit configured to output the video signal generated at the control unit, wherein the control unit comprises: a first step of causing the output unit to output a predetermined video signal at the time of turning on of a power source thereof; a second step of starting up the application in the state that the predetermined video signal is output in the first step; and a third step of, in the state that a video signal is generated from the broadcast signal on the basis of the start-up of the application in the second step, causing the output unit to output the video signal in the place of the predetermined video signal.

The invention can be more fully understood from the following detailed description when taken in conjunction with the accompanying drawings, in which:
FIG. 1 is a block diagram shown for explaining an outline of a video processing system of a digital broadcast receiver, the view showing one embodiment of the present invention;
FIG. 2 is a timing chart shown for explaining an operation of the digital broadcast receiver according to the embodiment at the time of turning on and turning off a main power supply switch;
FIG. 3 is a flowchart shown for explaining an operation of the digital broadcast receiver according to the embodiment at the time of turning on the main power supply switch;
FIG. 4 is a flowchart shown for explaining an operation of the digital broadcast receiver according to the embodiment at the time of turning off the main power supply switch;
FIG. 5 is a view shown for explaining a memory map of a nonvolatile memory in the digital broadcast receiver according to the embodiment;
FIG. 6 is a timing chart shown for explaining another operation of the digital broadcast receiver according to the embodiment at the time of turning on the main power supply switch;
FIG. 7 is a view shown for explaining another example of the memory map of the nonvolatile memory in the digital broadcast receiver according to the embodiment;
FIG. 8 is a flowchart shown for explaining another operation of the digital broadcast receiver according to the embodiment at the time of turning on the main power supply switch;
FIG. 9 is a block diagram shown for explaining a modification of a tuner unit of the digital broadcast receiver according to the embodiment;
FIG. 10 is a diagram shown for explaining another tuning operation of the tuner unit of the digital broadcast receiver according to the embodiment;
FIG. 11 is a block diagram shown for explaining another modification of the tuner unit of the digital broadcast receiver according to the embodiment;
FIG. 12 is a diagram shown for explaining still another tuning operation of the tuner unit of the digital broadcast receiver according to the embodiment;
FIG. 13 is a diagram shown for explaining still another tuning operation of the tuner unit of the digital broadcast receiver according to the embodiment;
FIG. 14 is a diagram shown for explaining still another tuning operation of the tuner unit of the digital broadcast receiver according to the embodiment; and
FIG. 15 is a diagram shown for explaining still another tuning operation of the tuner unit of the digital broadcast receiver according to the embodiment.

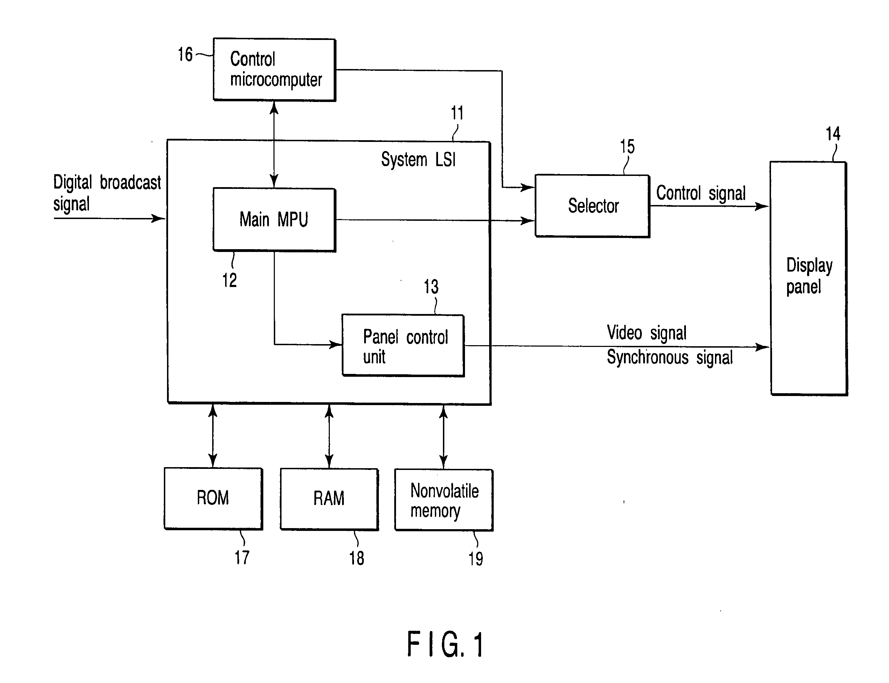

Hereinafter, one embodiment of the present invention will be explained in detail with reference to the drawings. FIG. 1 schematically shows a video processing system of a digital broadcast receiver which is explained in this embodiment. That is, a received digital broadcast signal is supplied to a main MPU 12 via a system large scale integration (LSI) 11.

The system LSI 11 is configured such that a power source thereof is turned on and off under the control of a control microcomputer 16 which will be described later in the state that the power source of the digital broadcast receiver is turned on. Then, the main MPU 12 of the system LSI 11 generates a video signal and a synchronous signal from the input digital broadcast signal on the basis of a main application which commands a receiving function.

Specifically, the main MPU 12 acquires a network information table (NIT), a program association table (PAT), a program map table (PMT), a packet identification (PID) and the like, and applies decoding processing to video streams on the basis of the acquired information to acquire a video signal and a synchronous signal. Incidentally, such a decoding process is not limited to the software decoding by means of the main MPU 12, and the decoding process can be also realized by controlling the decoder with the main MPU 12.

Then, the video signal and synchronous signal generated at the main MPU 12 are supplied to a display panel 14 via a panel control unit 13 constituting the system LSI 11 to be displayed as images. Furthermore, the main MPU 12 generates a control signal for turning on and off of, for example, a black-light with respect to the display panel 14 to output the control signal to a selector 15.

On the other hand, the main MPU 12 is connected to the control microcomputer 16 provided on the outside of the system LSI 11. The control microcomputer 16 is constantly supplied with a power in the state that the power source of the digital broadcast receiver is turned on. That is, the control microcomputer 16 can be driven irrespective of the power source of the system LSI 11.

Then, the control microcomputer 16 also generates a control signal for controlling turning on and off of the black-light with respect to the display panel 14 to output the control signal to the selector 15. The selector 15 functions so as to selectively supply the control signals output from the main MPU 12 and the microcomputer 16 to the display panel 14.

Here, connected to the system LSI 11 are a ROM 17 which stores various kinds of application programs executed by the main MPU 12, a RAM 18 for providing a work area to the main MPU 12, and a nonvolatile memory 19 in which various kinds of set information, control information and the like are stored.

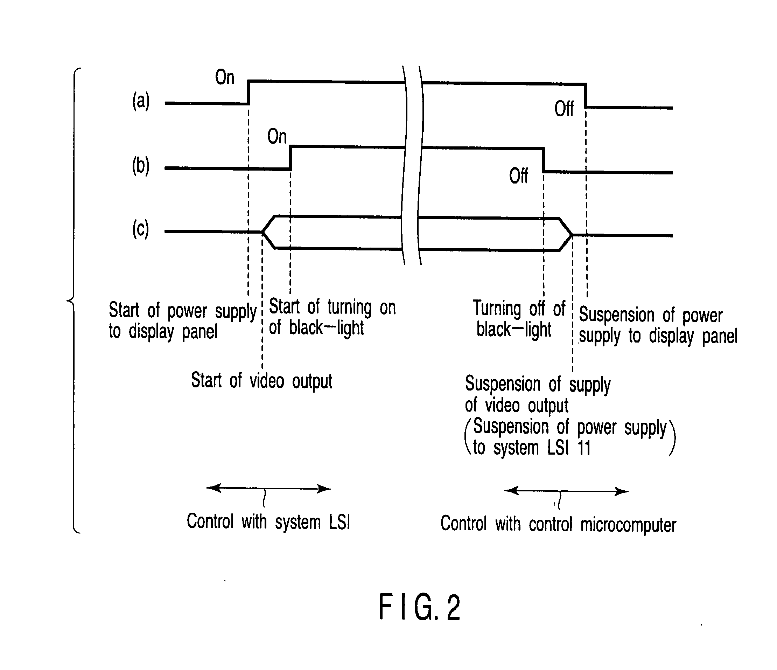

FIG. 2 explains an operation of the above-described digital broadcast receiver at the time of turning on and turning off the power source thereof. Symbol (a) of FIG. 2 denotes a panel power source which is supplied to the display panel 14. Symbol (b) of FIG. 2 denotes a control signal which is supplied to the display panel 14. Symbol (c) of FIG. 2 denotes a video signal and a synchronous signal which are supplied to the display panel 14.

That is, when the power source of the digital broadcast receiver is turned on, and the power source of the system LSI 11 is turned under the control of the control microcomputer 16, the system LSI 11 starts the supply of the power to the display panel 14, and then starts an output of images to the display panel 14. At this time, a video signal output to the display panel 14 is a signal corresponding to a static image (or a motion image) stored in the nonvolatile memory 19 in advance.

Next, the system LSI 11 outputs a control signal for lighting the black-light to the display panel 14, so that the above static image (or motion image) is displayed on the display panel 14. That is, the system LSI 11 executes a control for displaying the static image (or motion image) prepared in advance prior to the start-up of the main application which commands the receiving function at the time of turning on the power source.

Thereafter, the system LSI 11 starts up the main application which commands the receiving function. In this case, when an OS is present, the OS is also started up. Then, when a video signal generated with the main application is output from the system LSI 11, this video signal is displayed on the display panel 14 in the place of the previous static image (or motion image).

On the other hand, when the supply of the power source to the digital broadcast signal is cut off, the control is executed by the control microcomputer 16 in the place of the system LSI 11. More specifically, the control microcomputer 16 outputs a control signal for turning off the black-light of the display panel 14, and then, suspends the supply of the power to the system LSI 11 to suspend the video output. Then, the control microcomputer 16 suspends the supply of the power to the display panel 14.

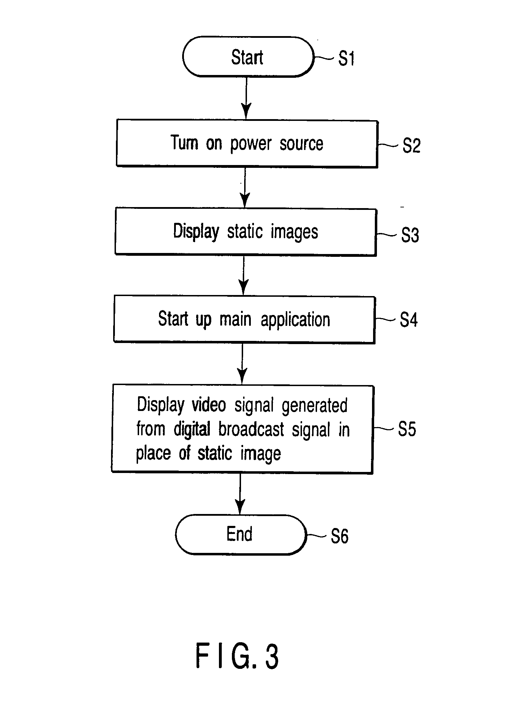

FIG. 3 is a flowchart in which the above-described processing operation is summarized at the time of turning on the power source of the system LSI 11 under the control of the control microcomputer 16 by turning on the power source of the digital broadcast receiver. More specifically, when the processing operation is started (step S1) and the power source is turned on in step S2, the system LSI 11 displays in step S3 a static image (or motion image) which has been prepared in advance.

Thereafter, the system LSI 11 starts up in step S4 the main application which commands the receiving function (also starts up an OS in the case where the OS is present), displays in step S5 the video signal generated from the digital broadcast signal on the display panel 14 in the place of the previous static image (or motion image) to terminate the processing (step S6).

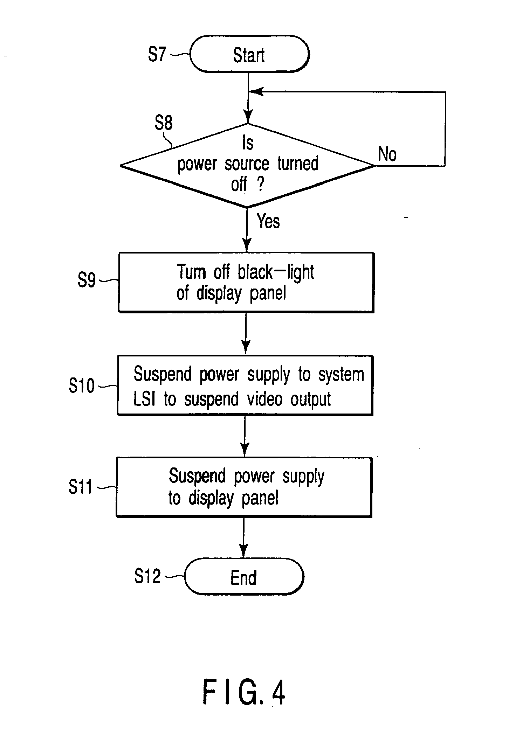

FIG. 4 shows a flowchart in which the above-described processing operation is summarized at the time of turning off the supply of the power source to the digital broadcast receiver. More specifically, when the processing operation is started (step S7), the control microcomputer 16 determines in step S8 whether or not the supply of the power source is turned off. Then, in the case where it is determined that the power source is turned off (YES), the control microcomputer 16 turns off in step S9 the black-light of the display panel 14.

Subsequently, the control microcomputer 16 suspends in step S10 the supply of the power to the system LSI 11 to suspend the video output. Then, in step S11, the microcomputer 16 suspends the supply of the power to the display panel 14 to terminate the processing (step S12).

According to the configuration described above, when the power source of the digital broadcast receiver is turned on, and the power source of the system LSI 11 is turned on under the control of the control microcomputer 16, the system LSI 11 displays the static image (or motion image) prepared in advance, followed by starting up the main application which commands the receiving function to generate the video signal from the broadcast signal. As a consequence, it becomes possible to allow the user to easily recognize the fact that the time up to the image output from the turning on of the power source is shortened and the start-up operation is transmitted to the digital broadcast receiver.

In addition, when the supply of the power source to the digital broadcast receiver is turned off, the processing operation, namely, the power-off sequence is controlled by the control microcomputer 16. More specifically, when the supply of the power to the digital broadcast receiver is turned off, the supply of the power to the system LSI 11 and the control microcomputer 16 is suspended, so that the digital broadcast receiver is operated only with the power charged in a capacitor (not shown). For this reason, it is difficult in terms of the electric circuit to execute the power-off sequence by operating the system LSI 11. Thus, the power-off sequence is executed by the control microcomputer 16 which has a low consumed power.

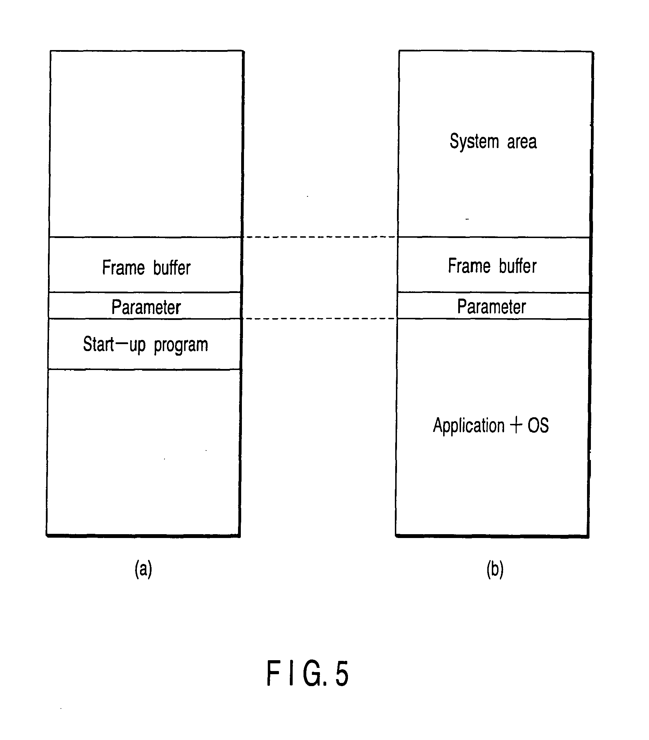

Here, symbol (a) of FIG. 5 denotes a memory map of the nonvolatile memory 19 with a boot program in the start-up sequence stored therein. That is, while the start-up program is stored, a signal of the static image is stored in a frame buffer, and pixel information of the display panel 14 and the like are stored in a parameter.

Furthermore, symbol (b) of FIG. 5 denotes a memory map of the nonvolatile memory 19 in the state that the main MPU 12 starts up the main application which commands the receiving function. That is, a system area is formed, and the main application software + OS are stored.

Here, at the time of moving from the boot program to the main application, the digital broadcast receiver is controlled in such a manner that the main application hands over the frame buffer and the parameter. In other words, it is possible to change over the display image without any disorder even when the image output control is handed over to the main application from the boot program by the main application handing over information set with the start-up sequence in a seamless manner.

The content to be handed over includes various kinds of information required for maintaining an output of the video signal to the display panel 14, such as, for example, set information associated with synchronization, and a record position of the buffer (not shown) for display. Incidentally, in the case where such information are not handed over, the broadcast receiver is controlled in such a manner that the static image is once muted, followed by displaying on the display panel 14 a video signal generated with the main application.

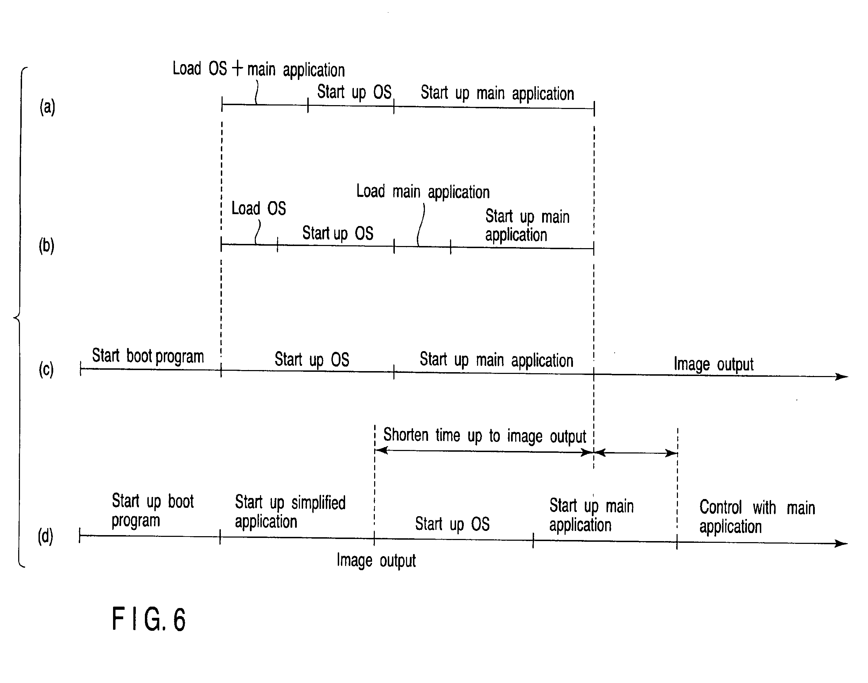

So far, an explanation has been made that the static image (or motion image) is displayed for the purpose of recovering time until the motion image is output at the start-up time. It is also possible to quicken the display of the motion image acquired from the broadcast signal. Normally, when the power source of the digital broadcast receiver is turned on (powered on), the main application is started up to provide an image output as denoted by symbols (a) to (c) of FIG. 6.

At symbol (a) of FIG. 6, after the main application + OS are loaded on the nonvolatile memory 19, the OS is started up and the main application is started up to output the image. Further, at symbol (b) of FIG. 6, after the OS is loaded on the nonvolatile memory 19 to be started, the main application is loaded on the nonvolatile memory 19 to be started up with the result that the image is output. Furthermore, at symbol (c) of FIG. 6, after the boot program is started up, the OS is started up and the main application is started up with the result that the image is output.

In contrast, as shown by symbol (d) of FIG. 6, the boot program is started up, and then, a simplified application which commands a receiving function is first started up to output the image. Thereafter, the OS is started up and the main application is started up, so that the operation is handed over from the image output by means of the simplified application to the image output by means of the main application.

In this manner, it is possible to quicken the image output timing as compared with the normal timing in such a manner that, after the boot program is started up, the simplified application which commands the receiving function is started up to output the image.

The simplified application is intended to attempt a decoding process by setting the PID only by channel information which are held in advance in the nonvolatile memory 19. Note that, in the main application, the decoding is started by executing tuning, acquiring the PAT, the PMT, and respective PID's, and executing the decoding process.

In the simplified application, channel information for acquiring images to be output can be acquired from respective PID's of a last program which has been received, a fixed PID and a PID (for example, a PID or the like which is designated at the start-up time out of the PID group recorded in the nonvolatile memory 19).

Incidentally, the receiving function by means of the simplified application has a restriction with respect to the receiving function by means of the main application. Examples of the restriction include an inability of the control (a channel change or the like) by means of a remote controller, and the absence of the receiving function of the data broadcasting.

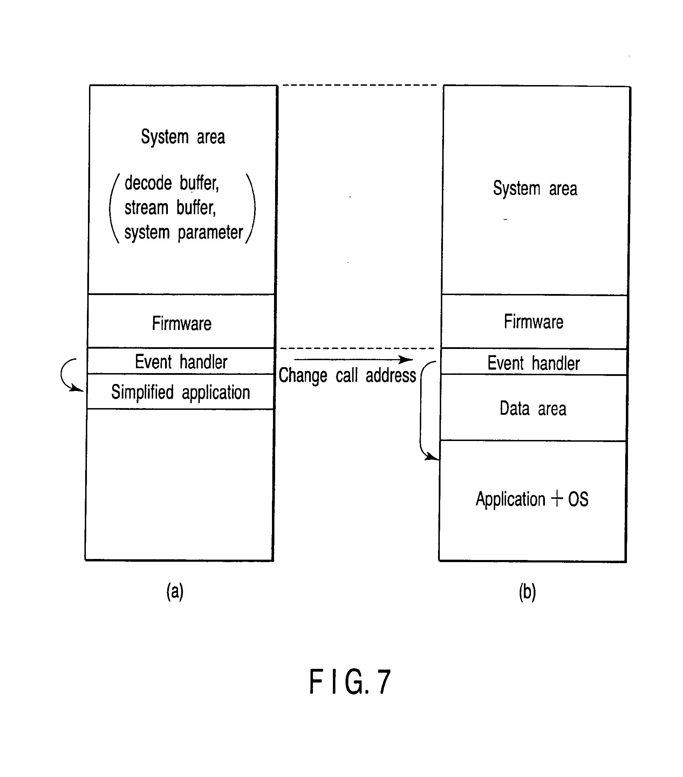

Here, symbol (a) of FIG. 7 denotes a memory map of the nonvolatile memory 19 with the boot program in the start-up sequence stored therein. That is, a system area is formed, and a firmware, an event handler, an simplified application and the like are stored.

Among them, in the system area, a decode buffer, a stream buffer, a system parameter and the like are also mapped. Further, the firmware for use in the simplified application is also expanded by the boot program. Note that the event handler is a handler which calls a module prepared in the simplified application on the basis of the event from the firmware.

In addition, symbol (b) of FIG. 7 denotes a memory map of the nonvolatile memory 19 in the state that the main MPU 12 starts up the main application which commands the receiving function. More specifically, a system area is formed, and a firmware, an event handler, a data area, the main application + OS, and the like are stored.

Here, at the time of moving from the boot program to the main application, it becomes possible to change over the display image without any disorder even when the main application hands over the system area and the firmware, and the image output control is handed over from the boot program to the main application.

In the processing of the motion image, the control is basically executed by the firmware (firmware code + middle ware will do). An event from the firmware is received by the (simplified and main) application to be determined, so that an instruction to the firmware is made. The main application takes over the control from the simplified application by changing a function of an application called by the event handler.

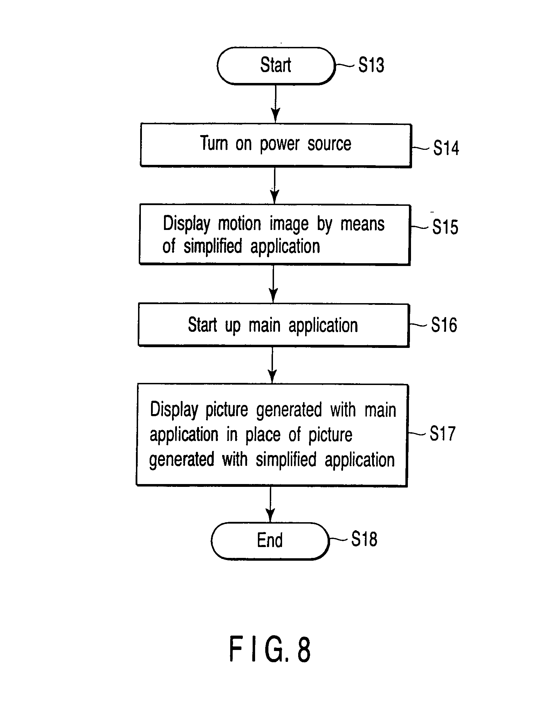

FIG. 8 is a flowchart in which the processing operation denoted by symbol (d) of FIG. 6 is outlined when the power source of the digital broadcast receiver is turned on, and the power source of the system LSI 11 is turned on under the control of the control microcomputer 16.

More specifically, when the processing operation is started (step S13), and the power source thereof is turned on in step S14, the system LSI 11 displays the motion image on the basis of the simplified application in step S15.

Thereafter, the system LSI 11 starts up in step S16 the main application (also starts up an OS in the case where the OS is present) which commands the receiving function. In step S17, the video signal generated from the digital broadcast signal on the basis of the main application is displayed on the display panel 14 in the place of the previous motion image, thereby terminating the processing (step S18).

So far, there has been explained that the time up to the image output is executed from the turning on of the power source thereof is recovered. It takes time to output images not only at the start-up time, but also at the time of changing over the channel. Hereinafter, there will be explained an increase in speed of image output at the time of changing over the channel.

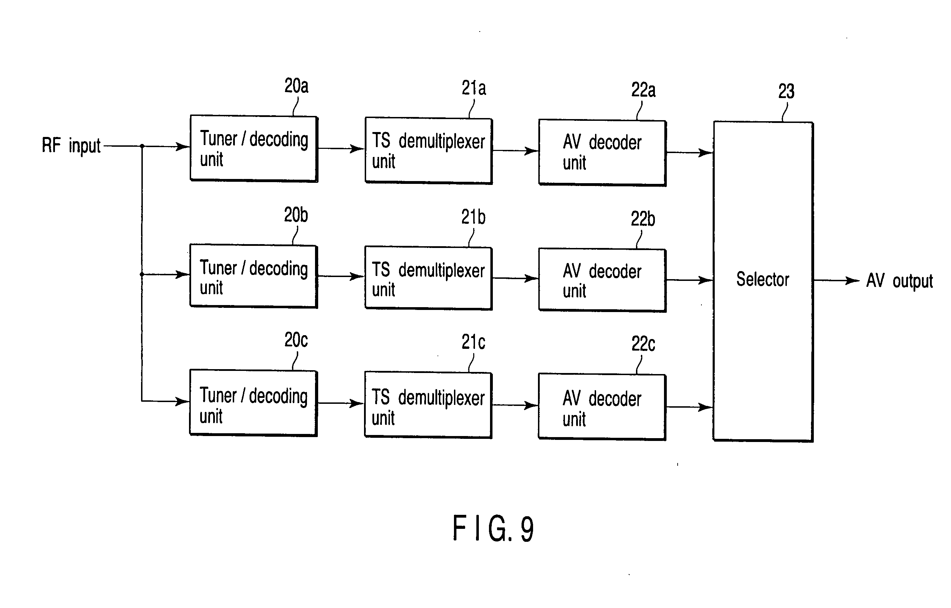

That is, as shown in FIG. 9, it is assumed that the above-described system LSI 11 has three systems of tuners, i.e., decoding units 20a to 20c, transport stream (TS) demultiplexer units 21a to 21a, and audio video (AV) decoder units 22a to 22c, and that the system LSI 11 has a function of decoding the received digital broadcast signal [radio frequency (RF) input] with respect to three channels at the same time and of selectively outputting its AV output by the selector 23.

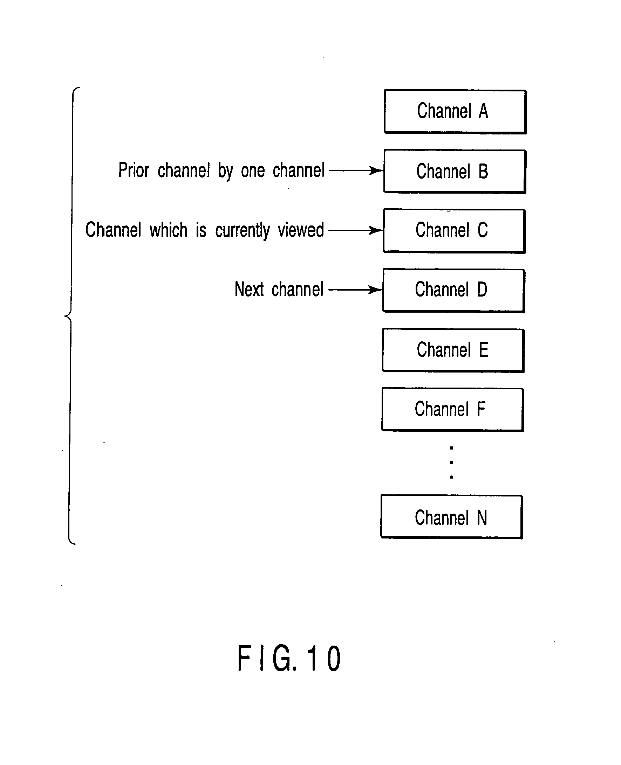

In this case, as shown in FIG. 10, a next channel (D) and a prior channel (B) by one channel are tuned with respect to a channel (C) which is currently viewed. As a result, at the time of changing over the channel to an adjacent channel, image output time until images of a program of the actually adjacent channel are output can be shortened. In this, it is supposed that the channel is changed over by operating a channel up/down key of a remote controller.

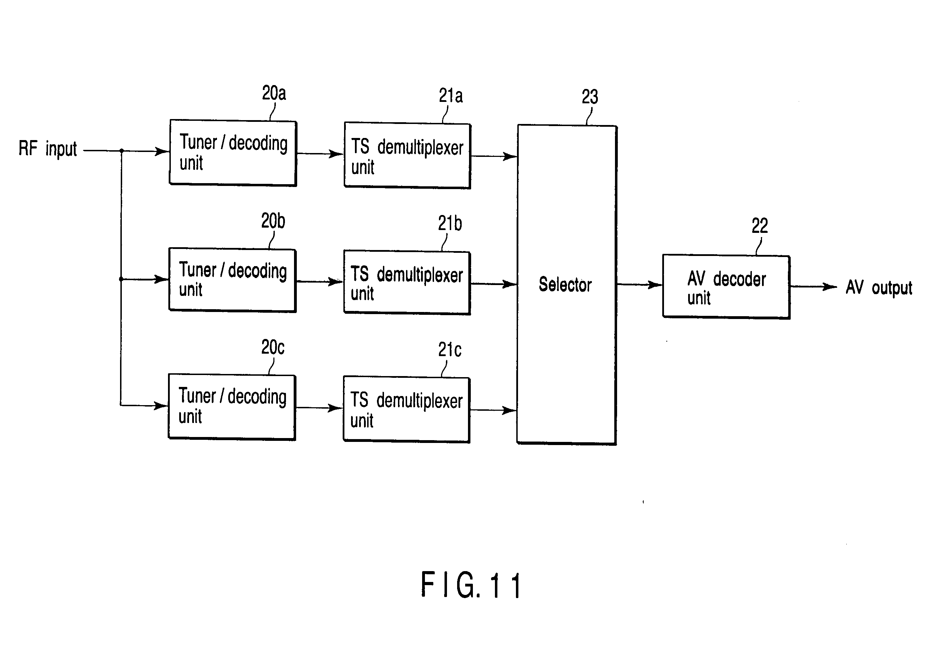

Further, as shown in FIG. 11, consideration will be given to a case of the configuration having three systems of tuners/decoding units 20a to 20c, and TS demultiplexer units 21a to 21c, in which an output of the TS demultiplexer units 21a to 21c is selected by the selector 22 and the AV output is obtained by the AV decoder unit 22. In such a configuration, the tuning is executed at the tuner units 20a to 20c, and the PID is acquired at the TS demultiplexer units 21a to 21c. Consequently, when the channel is changed over to an adjacent channel, time up to the acquisition of the PID can be shortened.

Furthermore, in FIG. 9, the above-described system LSI 11 has two systems of tuner/decoding units 20a and 20b, TS demultiplexers 21a and 21, and AV decoding units 22a and 22b, and the system LSI 11 has a function of decoding the received digital broadcast signal (RF input) with respect to two channels at the same time and of selectively outputting its AV output by the selector 23.

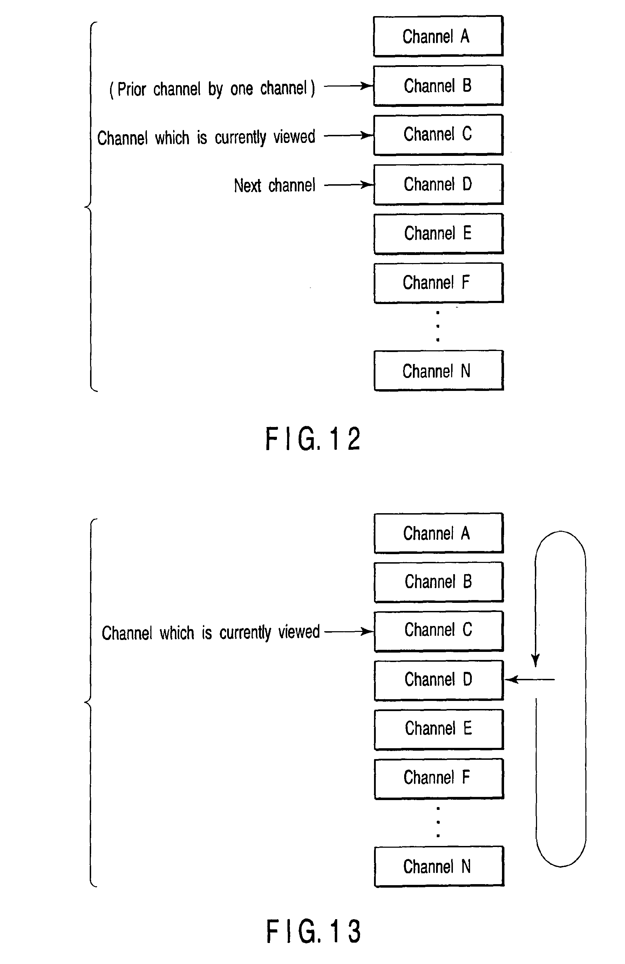

In this case, as shown in FIG. 12, a next channel (D) or a prior channel (B) by one channel is tuned with respect to a channel (C) which is currently viewed. As a result, when the channel which is tuned is changed over to an adjacent channel, image output time until images of a program of the actually adjacent channel are output can be shortened.

In addition, as shown in FIG. 13, a channel other than the channel (C) which is currently viewed is subsequently tuned in a cyclic manner to acquire a PID which is sent in each of the tuned channels. As a consequence, when the PID of the changed-over channel is not changed from a value which is last acquired at the time of changing over the channel to another channel by the user, time up to the acquisition of the PID can be shortened.

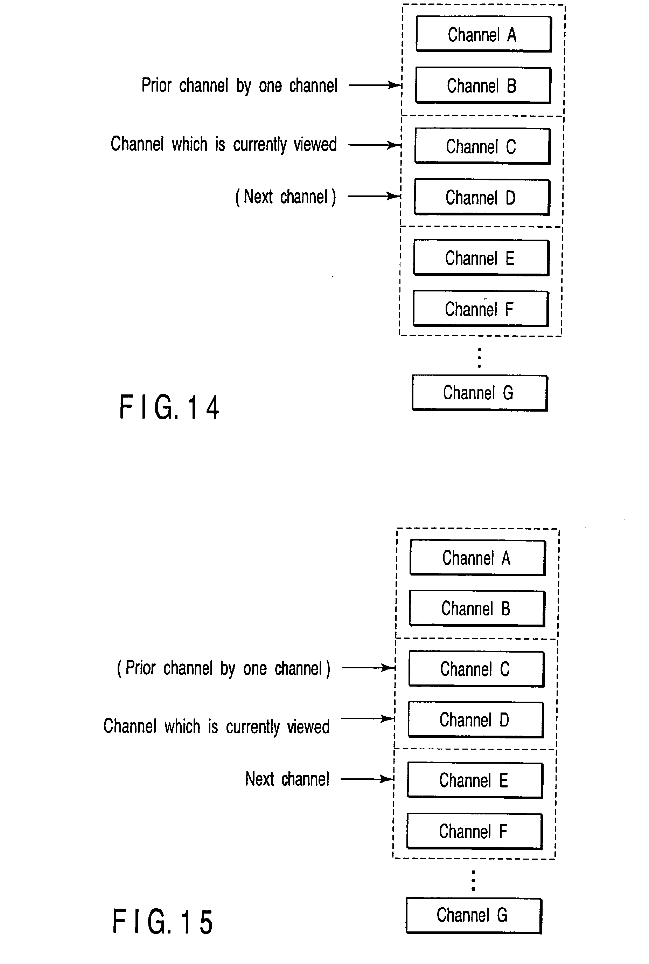

Moreover, as shown in FIGS. 14 and 15, in the case of a system for transmitting a plurality of channels (two channels in the drawings) by one transponder, it is possible to tune a channel subsequent to and a channel prior by one channel to a channel (C and D) which is currently viewed by tuning a transponder adjacent to a transponder including the channel (C and D) which is currently viewed. Accordingly, the same advantage as the tuning of three channels shown in FIG. 10 at the same time.

Also, PID's of respective channels are acquired via the network with the result that time up to the acquisition of the PID's from the tuning of a predetermined channel can be shortened. As a consequence, it becomes possible to shorten the image output time with even one tuner. Further, at the standby time, it is also possible to acquire the PID's by going around each channel with one tuner.

Note that the present invention is not limited to the above-described embodiment as it is. At the stage of implementing the invention, the constituent elements are varied to be embodied within the scope not departing from the gist of the invention. Furthermore, it is possible to form various inventions by appropriately combining a plurality of constituent elements disclosed in the above embodiment. For example, some constituent elements can be eliminated from all the constituent elements shown in the embodiment. Furthermore, the constituent elements associated with different embodiments may be appropriately combined.

## Claims

1. A broadcast receiver **characterized by** comprising:
a receiving unit (11) configured to receive a broadcast signal;
a control unit (12) configured to generate a video signal with respect to the broadcast signal received at the receiving unit (11) on the basis of application corresponding to a receiving function; and
an output unit (14) configured to output the video signal generated at the control unit (12),
wherein the control unit (12) is configured to:
cause the output unit (14) to output a predetermined video signal at the time of turning on a power source thereof;
cause the application to be started up in the state that the predetermined video signal is output; and
cause the output unit (14) to, in the state that a video signal is generated from the broadcast signal on the basis of the start-up of the application, output the video signal in the place of the predetermined video signal.

2. A broadcast receiver according to claim 1, **characterized in that** the control unit (12) is configured to:
cause the output unit (14) to output a video signal preset by a user, at the time of turning on the power source thereof;
cause the application to be started up in the state that the video signal is output; and
cause the output unit (14) to, in the state that a video signal is generated from the broadcast signal on the basis of the start-up of the application, output the video signal in the place of the video signal.

3. A broadcast receiver according to claim 2, **characterized in that** the control unit is configured to cause the application to hand over information set at the time of causing the output unit (14) to output the video signal, to the process of causing the output unit (14) to output the video signal generated from the broadcast signal.

4. A broadcast receiver according to claim 2, **characterized by** further comprising:
an auxiliary control unit (16) to control a process of suspending power supply to the output unit at the time of turning off of the power source thereof, the auxiliary control unit being configured to be driven with a standby power source.

5. A broadcast receiver according to claim 1, **characterized in that** the control unit (12) is configured to:
generate a video signal from a broadcast signal received at the receiving unit (11) on the basis of a simplified application at the time of turning on of the power source thereof, and cause the output unit (14) to output the video signal;
cause the application to be started up in the state that the video signal generated on the basis of the simplified application is output; and
cause the output unit (14) to, in the state that a video signal is generated from the broadcast signal on the basis of the start-up of the application, output the video signal in the place of the video signal generated on the basis of the simplified application.

6. A broadcast receiver according to claim 5, **characterized in that** the control unit (12) is configured to cause the application to hand over information set at the time of causing the output unit (14) to output the video signal generated on the basis of the simplified application, to the process of causing the output unit (14) to output the video signal generated from the broadcast signal.

7. A broadcast receiver **characterized by** comprising:
a receiving unit (11) configured to receive a broadcast signal;
a plurality of tuning units (20a to 20c, 21a to 21c, 22a to 22c) each configured to tune a predetermined channel from the broadcast signal received at the receiving unit (11) to generate a video signal;
a selector unit (23) configured to selectively output video signals generated at said plurality of tuning units (20a to 20c, 21a to 21c, 22a to 22c); and
an output unit (14) configured to output the video signal selected by the selector unit (23);
a control unit (12) configured to cause a tuning unit other than the tuning unit which is outputting the video signal output from the output unit (14) to tune a channel other than the channel corresponding to the video signal output from the output unit (14),
wherein the receiver is configured so that when a channel is changed over, a video signal from a tuning unit which tunes the changed-over channel is selected at the selector unit (23) and is output from the output unit (14).

8. A broadcast receiver according to claim 7, **characterized in that** the control unit (12) is configured to cause with a tuning unit other than the tuning unit which is outputting the video signal output from the output unit (14) to tune a channel prior by one channel to the channel corresponding to the video signal output from the output unit (14), or a channel subsequent to the channel.

9. A broadcast receiver according to claim 7, **characterized in that** the control unit (12) is configured to cause a tuning unit other than the tuning unit which is outputting the video signal output from the output unit (14) to tune in a cyclic manner a plurality of channels other than the channel corresponding to the video signal output from the output unit (14).

10. A method of controlling a broadcast receiver comprises:
a receiving unit (11) configured to receive a broadcast signal;
a control unit (12) configured to generate a video signal with respect to the broadcast signal received at the receiving unit (11) on the basis of an application corresponding to a receiving function; and
an output unit (14) configured to output the video signal generated at the control unit (12),
**characterized in that** the control unit (12) comprises:
a first step (S3, S15) of causing the output unit (14) to output a predetermined video signal at the time of turning on of a power source thereof;
a second step (S4, S16) of starting up the application in the state that the predetermined video signal is output in the first step (S3, S15); and
a third step (S5, S17) of, in the state that a video signal is generated from the broadcast signal on the basis of the start-up of the application in the second step (S4, S16), causing the output unit (14) to output the video signal in the place of the predetermined video signal.

11. A method of controlling a broadcast receiver, according to claim 10, **characterized in that** the control unit (12) further comprises:
a first step (S3) which is cause the output unit (14) to output a video signal preset by a user, at the time of turning on of the power source thereof;
a second step (S4) of starting up the application in the state that the video signal is output in the first step (S3); and
a third step (S5) of, in the state that a video signal is generated from the broadcast signal on the basis of the start-up of the application in the second step (S4), causing the output unit (14) to output the video signal in the place of the video signal.

12. A method of controlling a broadcast receiver, according to claim 1, **characterized in that** the control unit (12) causes the application to hand over information set at the time of causing the output unit (14) to output the video signal, to the process of causing the output unit (14) to output the video signal generated from the broadcast signal.

13. A method of controlling a broadcast receiver, according to claim 10, **characterized by** further comprising:
causing an auxiliary control unit (16) constituted to be driven by a standby power source to control the process of suspending power supply to the output unit at the time of turning off of the power source in the place of the control unit (12).

14. A method of controlling a broadcast receiver, according to claim 10, **characterized in that** the control unit (12) further comprises:
a first step (S15) of generating a video signal from the broadcast signal received at the receiving unit (11) on the basis of a simplified application to cause the output unit (14) to output the video signal at the time of turning on of the power source;
a second step (S16) of starting up the application in the state that the video signal generated on the basis of the simplified application in the first step (S15) is output; and
a third step (S17) of, in the state that a video signal is generated from the broadcast signal on the basis of the start-up of the application in the second step (S16), causing the output unit (14) to output the video signal in the place of the video signal generated on the basis of the simplified application.

15. A method for controlling the broadcast receiver according to claim 14, **characterized in that** the control unit (12) causes the application to hand over information set at the time of causing the output unit (14) to output the video signal generated on the basis of the simplified application, to the process of causing the output unit (14) to output the video signal generated from the broadcast signal.
